# FASCICULE DE BREVET EUROPEEN

(11) **EP 3 066 565 B1**
(45) Date de publication et mention de la délivrance du brevet: **14.09.2022**
(21) Numéro de dépôt: 14793840.1
(22) Date de dépôt: 03.11.2014
(51) Int. Cl.: G06F 9/48

(54) **PROCÉDÉ ET PROGRAMME D'ORDINATEUR POUR L'EXÉCUTION DÉPORTÉE DE TÂCHES INFORMATIQUES D'UN ÉQUIPEMENT SANS FIL**
VERFAHREN UND COMPUTERPROGRAMM ZUR EX-SITU-AUSFÜHRUNG VON COMPUTERAUFGABEN EINES ELEMENTS EINER FUNKVORRICHTUNG
METHOD AND COMPUTER PROGRAM FOR THE OFF-SITE EXECUTION OF COMPUTING TASKS OF AN ITEM OF WIRELESS EQUIPMENT

(30) Priorité: 05.11.2013 FR 1360817
(43) Date de publication de la demande: 14.09.2016
(73) Titulaire: Commissariat à l'Énergie Atomique et aux Énergies Alternatives, 75015 Paris (FR); Università degli Studi di Roma "La Sapienza", 00185 Roma (IT)
(72) Inventeur: CALVANESE STRINATI, Emilio, F-38000 Grenoble (FR); BARBAROSSA, Sergio, I-00184 Rome (IT); OUEIS, Jessica, 38000 Grenoble (FR)
(74) Mandataire: Brevalex
(86) Numéro de dépôt international: PCT/EP2014/073548
(87) Numéro de publication internationale: WO 2015/067554

(56) Documents cités:
- EP-A1- 0 446 084
- FR-A1- 2 883 396
- US-A1- 2006 224 359
- US-A1- 2011 231 469
- US-B1- 6 182 058

## Description

### DOMAINE TECHNIQUE

Le domaine de l'invention est celui des systèmes de communication radio cellulaire. L'invention concerne plus particulièrement un traitement distribué de tâches informatiques selon lequel l'exécution de certaines tâches est déportée d'un équipement sans fil à un équipement tiers distant.

### ÉTAT DE LA TECHNIQUE ANTÉRIEURE

Les équipements sans fil, tels que par exemple des équipements mobiles d'usager ou encore des capteurs sans fil, sont de plus en plus capables d'exécuter des applications logicielles complexes qui nécessitent des capacités de traitement informatique importantes dont résultent notamment des besoins en termes de ressources mémoire et énergétiques.

Ces ressources sont toutefois limitées, et venir déporter l'exécution de certaines tâches informatiques de l'équipement sans fil vers un équipement tiers distant du système de communication radio cellulaire offre la possibilité d'étendre les capacités de l'équipement sans fil ainsi que la durée de vie de sa batterie. S'agissant des équipements mobiles d'usager, on pourra se référer à l'étude de K.Karthik et al. intitulée « A Survey of Computation Offloading for Mobile Systems », Mobile Networks and Applications, vol. 18, no. 1, 2013.

Le document US 2011 231 469 décrit un procédé de déport de tâches informatiques avec un mécanisme de prise de décision pour juger de la faisabilité et de l'opportunité du déport mais les tâches ne sont pas en cours d'exécution, l'analyse de déport est faite hors-ligne avant de lancer le traitement.

Avec l'émergence d'équipements mobiles d'usager avancés de type « smartphone » et l'arrivée de nouvelles applications consommatrices de trafic de données, les opérateurs de réseaux de télécommunication cellulaire doivent faire face à une montée exponentielle du trafic de données. Ceci a pour conséquence une congestion de plus en plus accrue des cellules du réseau d'accès, et donc une dégradation de la qualité de service offerte aux usagers du réseau. Une évolution de ces réseaux visant à répondre à ce problème de congestion consiste à y introduire des points d'accès locaux de faible puissance offrant une couverture radio limitée, généralement dédiée pour un usage résidentiel ou en entreprise. Ainsi l'adjonction, aux côtés des stations de base classiques couvrant une macro-cellule dont le rayon s'étend typiquement de 2 km à 35 km, de points d'accès locaux de faible puissance couvrant une petite cellule telle qu'une micro cellule (rayon inférieur à 2 km), une pico-cellule (dont la portée est inférieur à 200 m), ou une femto-cellule (portée de l'ordre de 10 m) permet de répondre à cette croissance du trafic.

Si de tels points d'accès locaux permettent d'amener des ressources radio à proximité des usagers, ils amènent également à proximité des usagers des ressources en termes de mémoire et de capacités de traitement qui peuvent être exploitées pour déporter une partie des tâches informatiques devant être exécutées par les équipements mobiles d'usager. De la même manière, une passerelle de collecte de données de capteurs sans fil dispose de ressources pouvant être exploitées par les capteurs.

Un tel déport nécessite la prise d'une décision qui est généralement basée sur la prise en compte d'un seul paramètre, à savoir un compromis entre l'énergie consommée pour réaliser l'exécution déportée d'une tâche et l'énergie économisée par l'équipement sans fil en ayant déportée cette exécution.

Or de nombreux autres paramètres et conditions peuvent être considérés pour consolider la décision et l'adapter aux conditions du système considéré. Par exemple des limitations des équipements sans fil autres que la consommation d'énergie peuvent être considérées, comme les capacités de traitement informatique ou la ressource mémoire. Par ailleurs, la décision de déport dépend fortement de la tâche considérée, par exemple de ses contraintes de latence, de sa complexité de traitement informatique, de ses besoins en termes de mémoire, etc. On comprend que la prise en compte d'un seul paramètre, tel que le compromis sur la consommation d'énergie, ne permet pas de prendre une décision holistique à même notamment de satisfaire la qualité d'expérience (QoE pour « Quality of Expérience ») attendue par les usagers.

D'autres travaux se sont ainsi concentrés à élaborer des algorithmes de décision multi-critères, de manière à optimiser la prise de décision. Ces algorithmes nécessitent toutefois de résoudre des problèmes d'optimisation relativement complexes. On pourra à titre d'exemple se reporter à l'article de Kovachev, D. et al. intitulé "Adaptive Computation Offloading from Mobile Devices into the Cloud", 2012 10th IEEE International Symposium on Parallel and Distributed Processing with Applications (ISPA), pp.784,791, 10-13 July 2012 qui propose un algorithme de décision considérant l'énergie, la mémoire et le temps d'exécution.

### EXPOSÉ DE L'INVENTION

Il existe ainsi un besoin pour un processus de décision pour le déport de l'exécution d'une tâche informatique d'un équipement sans fil à un équipement tiers distant qui puisse prendre en considération plusieurs paramètres, sans pour autant les inclure dans un problème d'optimisation complexe.

L'invention vise à répondre à ce besoin et propose pour ce faire un procédé de traitement, local ou déporté, de tâches informatiques générées par une application logicielle en cours d'exécution sur un équipement sans fil d'un réseau de communication cellulaire, le procédé comprenant
- une étape de classification de la tâche dans une classe appartenant à un groupe de classes constitué au moins d'une classe d'exécution déportée immédiate et d'une classe d'exécution locale immédiate,
- lorsque la tâche appartient à la classe d'exécution déportée immédiate, une étape de transmission d'une requête d'exécution déportée de la tâche par un équipement tiers du réseau de communication cellulaire, et
- lorsque la tâche appartient à la classe d'exécution locale immédiate, une étape d'exécution prioritaire de la tâche par l'équipement sans fil, et caractérisé en ce que l'étape de classification est réalisée en parcourant un graphe orienté constitué de nœuds de décision ayant chacun des successeurs dans le graphe et de nœuds terminaux chacun affecté à une des classes dudit groupe, les nœuds de décision étant répartis en au moins trois niveaux hiérarchiques eux-mêmes répartis en au moins trois sous-ensembles de niveaux, le parcours du graphe s'effectuant depuis un nœud de décision initial jusqu'à atteindre un nœud terminal, et comprenant :
   - lors du passage par un nœud de décision quelconque d'un premier sous-ensemble de niveaux, la vérification d'un critère de faisabilité du déport de la tâche pour exécution par un équipement tiers,
   - lors du passage par un nœud de décision quelconque d'un deuxième sous-ensemble de niveau, la vérification d'un critère de criticité de l'exécution de la tâche, et
   - lors du passage par un nœud de décision quelconque d'un troisième sous-ensemble de niveaux, la vérification d'un critère d'opportunité de l'exécution de la tâche.

Certains aspects préférés mais non limitatifs de procédé sont les suivants :
- il comprend la réception par l'équipement mobile d'usager d'un message d'autorisation d'exécution déportée de la tâche ;
- le groupe de classes est constitué au moins d'une classe d'exécution déportée immédiate, d'une classe d'exécution déportée différée, d'une classe d'exécution locale immédiate et d'une classe d'exécution locale différée ;
- la vérification d'un critère de faisabilité du déport de la tâche pour exécution par un équipement tiers comprend une mesure de l'état de la connectivité de l'équipement sans fil au réseau de communication cellulaire ;
- la vérification d'un critère de criticité de l'exécution de la tâche comprend une détermination de la latence de la tâche ;
- il comprend la vérification d'un critère de criticité de l'exécution de la tâche par l'équipement sans fil ;
- il comprend la vérification d'un critère d'opportunité du déport de la tâche pour exécution par un équipement tiers ;
- il comprend la vérification d'un critère d'opportunité de l'exécution de la tâche par l'équipement sans fil ;
- l'équipement sans fil est un équipement mobile d'usager et l'équipement tiers est un point d'accès local au réseau de communication cellulaire couvrant une microcellule, un picocellule ou une femtocellule, ou un relais vers ledit point d'accès local.

L'invention s'étend également à un produit programme d'ordinateur comprenant des instructions de code pour l'exécution de l'étape de classification du procédé présenté ci-dessus, lorsque ledit programme est exécuté sur un ordinateur.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma illustrant un graphe orienté pouvant être utilisé dans un mode de réalisation possible du procédé selon l'invention ;
- les figures 2 à 4 sont de schémas issus de simulations illustrant les performances de l'invention en termes de consommation d'énergie, comparativement à d'autres processus de décision de déport, selon différents scénarii.

### EXPOSÉ DÉTAILLÉ DE MODES DE RÉALISATION PARTICULIERS

L'invention a pour objet un procédé de traitement d'une tâche informatique dont l'exécution est requise par un équipement sans fil d'un réseau de communication cellulaire. Elle concerne également un produit programme d'ordinateur comprenant des instructions de code pour l'exécution des étapes du procédé lorsque ledit programme est exécuté sur un ordinateur.

L'invention propose un processus de décision de déport d'une tâche informatique en vue de son exécution, non pas par l'équipement sans fil lui-même, mais par un équipement tiers distant tel qu'un point d'accès local au réseau de communication cellulaire (station de base d'une micro-, pico- ou femto-cellule), un relais vers un tel point d'accès local, ou encore une passerelle, par exemple une passerelle de collecte de données de capteurs sans fil. Ce processus exploite une classification hiérarchique qui permet la prise en considération de plusieurs paramètres (comme par exemple la consommation d'énergie, les contraintes de latence, les besoins en termes de mémoire, les capacités de traitement informatique, les conditions de communication), sans pour autant augmenter la complexité de la prise de décision. Les paramètres pris en compte peuvent en outre être modifiés selon les applications visées, en particulier dynamiquement en fonction de l'évolution du système.

La classification hiérarchique comprend une série d'opérations de classification successives, chaque opération étant basée sur la prise en considération d'un paramètre affectant la décision de déport ou non.

A chaque créneau temporel considéré, le procédé selon l'invention est mis en œuvre pour chacune des tâches informatiques générées par la ou les applications logicielles en cours d'exécution sur l'équipement sans fil.

Pour chacune de ces tâches, le procédé selon l'invention comprend une étape de classification de la tâche dans une classe appartenant à un groupe de classes constitué au moins d'une classe d'exécution déportée immédiate et d'une classe d'exécution locale immédiate. A chaque classe est ainsi associée une décision particulière quant au traitement de la tâche.

Cette étape de classification est ainsi suivie, lorsque la tâche appartient à la classe d'exécution déportée immédiate, d'une étape de transmission d'une requête d'exécution déportée de la tâche par un équipement tiers du réseau de communication cellulaire. Le cas échéant, l'équipement sans fil est ensuite informé de l'acceptation de cette requête par la réception d'un message d'autorisation d'exécution déportée de la tâche.

L'étape de classification est par ailleurs suivie, lorsque la tâche appartient à la classe d'exécution locale immédiate, d'une étape d'exécution prioritaire de la tâche par l'équipement sans fil.

Dans un mode de réalisation possible, ledit groupe de classes est constitué d'au moins quatre classes : une classe d'exécution déportée immédiate, une classe d'exécution déportée différée, une classe d'exécution locale immédiate et une classe d'exécution locale différée. Il peut en outre comprendre une classe de décision différée. Lorsque l'exécution (locale ou déportée) ou la décision sont différées, une classification de la tâche peut être de nouveau réalisée lors du créneau temporel suivant ou lors d'un créneau temporel ultérieur.

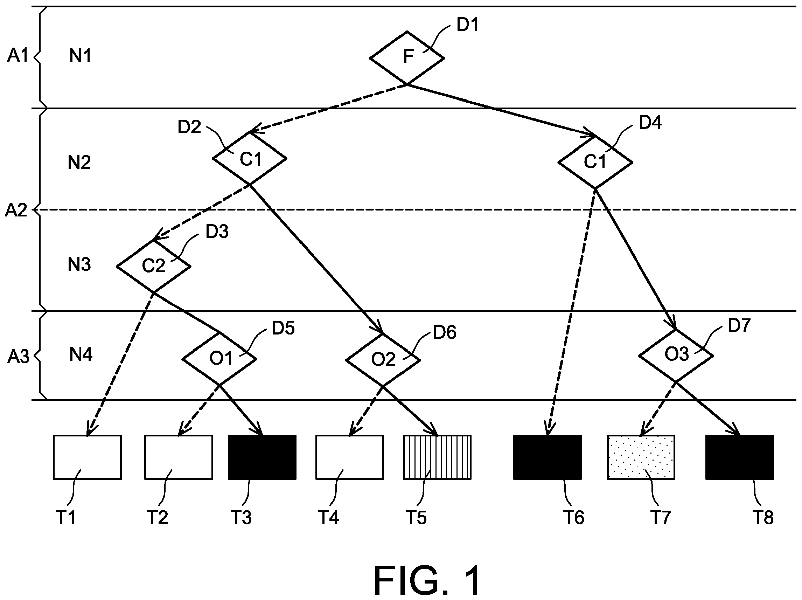

L'étape de classification est plus particulièrement réalisée en parcourant un graphe orienté dont un exemple de réalisation est illustré par la figure 1. Le graphe orienté est constitué de nœuds de décision D1-D7 ayant chacun des successeurs dans le graphe, et de nœuds terminaux T1-T8 chacun affecté à une des classes dudit groupe.

Les nœuds de décision peuvent notamment être des nœuds de décision binaire ayant chacun deux successeurs dans le graphe. Il sera ainsi fait référence à de tels nœuds de décision binaire dans la suite de la description faite en référence à l'exemple de réalisation illustré par la figure 1, sans que cela ne soit pour autant limitatif, un nœud de décision du graphe orienté pouvant comporter plus de deux successeurs selon le critère vérifié lors du passage par ce nœud.

Les nœuds de décision binaires D1-D7 sont répartis en au moins trois niveaux hiérarchiques N1-N4, ces niveaux étant eux-mêmes répartis en au moins trois sous-ensembles de niveaux A1-A3 comprenant chacun au moins un niveau. Les niveaux d'un sous-ensemble de niveaux peuvent être des niveaux hiérarchiquement consécutifs du graphe, sans pour autant que cela ne soit pour autant limitatif.

En référence à l'exemple de la figure 1, le premier sous-ensemble de niveaux A1 comprend un unique niveau N1 où l'on retrouve le nœud de décision binaire D1 faisant office de sommet ou de nœud de décision initial du graphe orienté. Le deuxième sous-ensemble de niveaux A1 comprend deux niveaux N2 et N3 où l'on retrouve les nœuds de décision binaires D2, D4 et D3, respectivement. Le troisième sous-ensemble de niveaux A3 comprend un seul niveau N4 où l'on retrouve les nœuds de décision D5-D7.

Le parcours du graphe s'effectue depuis un nœud de décision binaire initial (nœud D1 dans l'exemple de la figure 1) jusqu'à atteindre un nœud terminal T1-T8. Ce parcours comprend :
- lors du passage par un nœud de décision binaire D1 quelconque d'un premier sous-ensemble de niveaux A1, la vérification d'un critère de faisabilité du déport de la tâche pour exécution par l'équipement tiers,
- lors du passage par un nœud de décision binaire C1, C2 quelconque d'un deuxième sous-ensemble de niveaux A2, la vérification d'un critère de criticité de l'exécution de la tâche, et
- lors du passage par un nœud de décision binaire O1, O2, O3 quelconque d'un troisième sous-ensemble de niveaux A3, la vérification d'un critère d'opportunité de l'exécution de la tâche.

Dans un mode de réalisation possible, tel que celui illustré par la figure 1, les premier, deuxième et troisième sous-ensembles de niveaux A1-A3 sont ainsi agencés hiérarchiquement dans le graphe. De sorte que le ou les critères de faisabilité sont étudiés avant le ou les critères de criticité, eux-mêmes étudiés avant le ou les critères d'opportunité. L'invention n'est toutefois pas limitée à ce cas de figure, et les termes de « premier », « deuxième » et « troisième » sous-ensembles doivent être compris comme une désignation d'un sous-ensemble particulier, et non comme un ordre hiérarchique dans le graphe. Ainsi, à titre d'exemple, le premier sous-ensemble peut parfaitement être parcouru après le troisième sous-ensemble, lui-même parcouru après le deuxième sous-ensemble. Et l'on rappelle que les niveaux d'un sous-ensemble de niveaux ne sont pas nécessairement consécutifs dans le graphe.

L'invention n'est par ailleurs pas limitée aux trois sous-ensembles de niveaux décrits ci-dessus et couvrant les familles de critères de décision faisabilité, criticité et opportunité. Elle s'étend au contraire à un nombre plus important de sous-ensembles de manière à permettre l'introduction d'autres familles de critères de décision, comme par exemple un sous-ensemble de niveaux pour la vérification d'un critère de sécurité de l'exécution de la tâche, ou encore pour la vérification d'un critère de non violation de la vie privée (par exemple lorsque des données personnelles pourraient être transmises à un tiers en cas d'exécution déportée), etc.

La description suivante s'attache à donner, en référence à l'exemple purement illustratif de la figure 1, des exemples de critères de décision pouvant être attachés à un nœud de décision, et pour lesquels on vérifie le respect ou non lors du parcours du graphe pour classifier une tâche dans l'une ou l'autre des classes.

Dans cet exemple, un critère de faisabilité F du déport de la tâche pour exécution par l'équipement tiers est ainsi attaché au nœud de décision binaire initial D1. Le passage par ce nœud D1 entraîne une étape de détermination du respect ou non de ce critère, et ainsi la réalisation d'une distinction entre tâches déportables et tâches non déportables.

Le critère de faisabilité F est par exemple un critère technique tel qu'un paramètre de configuration matérielle nécessaire à l'exécution de la tâche. La vérification de ce critère consiste par exemple à interroger une table de correspondance où est reporté le caractère déportable ou non d'une tâche (une telle table pouvant être construite par apprentissage, en y reportant par exemple le résultat d'un test de déport d'une tâche), ou encore à interroger directement la tâche lorsque le caractère déportable ou non y est indiqué dès sa programmation.

Le critère de faisabilité F peut également prendre en compte la qualité d'un canal de communication reliant l'équipement sans fil et l'équipement tiers distant. La vérification du respect de ce critère peut alors comprendre une mesure de l'état de la connectivité de l'équipement sans fil au réseau de communication cellulaire, ledit critère n'étant pas respecté lorsque l'état mesuré est inférieur à un seuil. Par exemple, en cas d'absence de connectivité, le critère de faisabilité F n'est pas rempli.

Lorsque le ou les critères de faisabilité sont remplis, et toujours dans l'exemple de la figure 1, le parcours du graphe se poursuit par le passage du nœud de décision binaire D2 auquel est attaché un première critère de criticité de l'exécution de la tâche C1, ici prévu pour réaliser une distinction entre tâches urgentes et tâches non urgentes.

Ce premier critère C1 est par exemple rempli lorsque la latence associée à la tâche est inférieure à un seuil donné qui dépend par exemple de la qualité d'expérience QoE attendue par un usager. Ce premier critère C1 peut ainsi exploiter la durée de vie TTL (pour « Time To Live ») de la tâche, laquelle peut être renseignée dans une table de correspondance, le critère étant rempli lorsque la durée de vie de la tâche est inférieure à un seuil, par exemple un pourcentage d'une durée de vie maximale acceptable par l'usager.

Lorsque ce premier critère de criticité C1 est rempli, le parcours du graphe de la figure 1 se poursuit par le passage du nœud de décision binaire D3 auquel est attaché un second critère de criticité de l'exécution de la tâche C2. Ce second critère C2 est plus particulièrement un critère de criticité de l'exécution de la tâche par l'équipement sans fil.

Ce second critère C2 est appliqué aux tâches déportables urgentes que l'on n'exclut toutefois pas d'exécuter en local par l'équipement sans fil. Cependant, l'exécution en local de ces tâches peut ne pas être possible du fait d'un manque de ressources nécessaires dans l'équipement sans fil. Dans ce cas, ces tâches doivent nécessairement être déportées. La détermination du respect ou non de ce second critère C2 peut prendre la forme d'une série de tests prenant en considération les capacités de traitement, les besoins en termes de mémoire et de consommation de batterie. A titre d'exemple, ce critère C2 est respecté dès lors que l'une des conditions suivantes est observée :
- le niveau de charge de la batterie est inférieur à un seuil critique prédéfini ;
- la tâche consomme plus qu'un pourcentage donné du niveau de charge restant ;
- les besoins en termes de mémoire de la tâche sont supérieurs à un pourcentage autorisée de la mémoire disponible de l'équipement sans fil ;
- la tâche nécessite des capacités de traitement supérieures à un pourcentage des capacités de traitement de l'équipement sans fil.

Lorsque ce deuxième critère de criticité C2 est rempli, l'exécution en local de la tâche est considérée comme critique, et le parcours du graphe permet d'aboutir au nœud terminal T1, ici associé à la classe d'exécution déportée immédiate.

Lorsque ce deuxième critère de criticité C2 n'est pas rempli, l'exécution en local de la tâche n'est pas considérée comme critique et la tâche déportable urgente peut alors soit être déportée soit être exécutée localement. La décision est ici prise par passage par le nœud de décision D5 auquel est attaché un critère d'opportunité O1 de l'exécution de la tâche. Le critère d'opportunité est par exemple un critère d'opportunité de l'exécution de la tâche par l'équipement tiers. Il peut s'agir d'un critère d'opportunité énergétique, la détermination du respect de ce critère O1 pouvant consister à vérifier si l'exécution déportée par l'équipement tiers consomme moins d'énergie que l'exécution en local.

Lorsque ce critère O1 est respecté, le parcours du graphe permet d'aboutir au nœud terminal T2, ici associé comme le nœud terminal T1 à la classe d'exécution déportée immédiate. A contrario, lorsque ce critère O1 n'est pas respecté, le parcours du graphe permet d'aboutir au nœud terminal T3, ici associé à la classe d'exécution locale immédiate.

Revenant au nœud de décision D2, lorsque le critère de criticité C1 n'est pas rempli (la tâche est alors déportable mais non urgente), le parcours du graphe passe par le nœud de décision D6 auquel est attaché un critère d'opportunité O2 d'exécution de la tâche. Ce critère O2 vise par exemple à étudier l'opportunité de déporter la tâche bien qu'elle ne soit pas urgente.

La détermination du respect ou non de ce critère d'opportunité O2 consiste par exemple à examiner, lorsque la capacité du canal de communication permet de transmettre toutes les tâches classifiées dans la classe d'exécution déportée immédiate (nœuds terminaux T1 et T2), l'état du canal. Par exemple, si le coefficient de canal courant est supérieur au coefficient moyen, on considère que l'état du canal est bon. Le critère d'opportunité O2 est alors rempli, le parcours du graphe permet d'aboutir au nœud terminal T4, ici associé à la classe d'exécution déportée immédiate. Ceci permet de déporter l'exécution du maximum des tâches déportables non urgentes, en donnant par exemple priorité à celles présentant les latences les plus faibles.

A contrario, lorsque le critère d'opportunité O2 n'est pas rempli, le parcours du graphe permet d'aboutir au nœud terminal T5, ici associé à la classe d'exécution déportée différée.

Un tel déport de tâches non urgentes peut être considéré non seulement comme une utilisation opportuniste de la liaison radio, mais également comme un outil permettant de soulager le système dans les créneaux temporels suivants. A contrario, on empêche le système de réaliser des déports coûteux lorsque les conditions du canal ne sont pas bonnes.

Revenant au nœud de décision D1, lorsque le critère de faisabilité F n'est pas rempli (la tâche n'est pas déportable), le parcours du graphe passe par le nœud de décision D4 auquel est attaché le premier critère de criticité C1 d'exécution de la tâche déjà décrit précédemment. Ainsi, en fonction de la latence de la tâche, celle-ci est classifiée urgente ou non urgente.

Lorsque le premier critère de criticité C1 est respecté (la tâche est urgente), le parcours du graphe permet d'aboutir au nœud terminal T6, ici associé à la classe d'exécution locale immédiate. A contrario, lorsque ce critère C1 n'est pas respecté (la tâche n'est pas urgente), le parcours du graphe passe par le nœud de décision D7 auquel est associé un critère d'opportunité O3 d'exécution de la tâche non urgente par l'équipement mobile d'usager. Ce critère d'opportunité O3 est par exemple similaire au critère de criticité C2 et permet de vérifier si l'exécution de la tâche non urgente serait critique pour l'équipement mobile d'usager.

Dans la négative, on réalise une utilisation opportuniste des ressources de l'équipement mobile pour réaliser une exécution en local immédiate de la tâche, bien qu'elle soit non urgente. Le parcours du graphe permet alors d'aboutir au nœud terminal T8, ici associé à la classe d'exécution locale immédiate.

Si une telle utilisation opportuniste n'est pas possible, le parcours du graphe permet d'aboutir au nœud terminal T7, ici associé à la classe d'exécution locale différée.

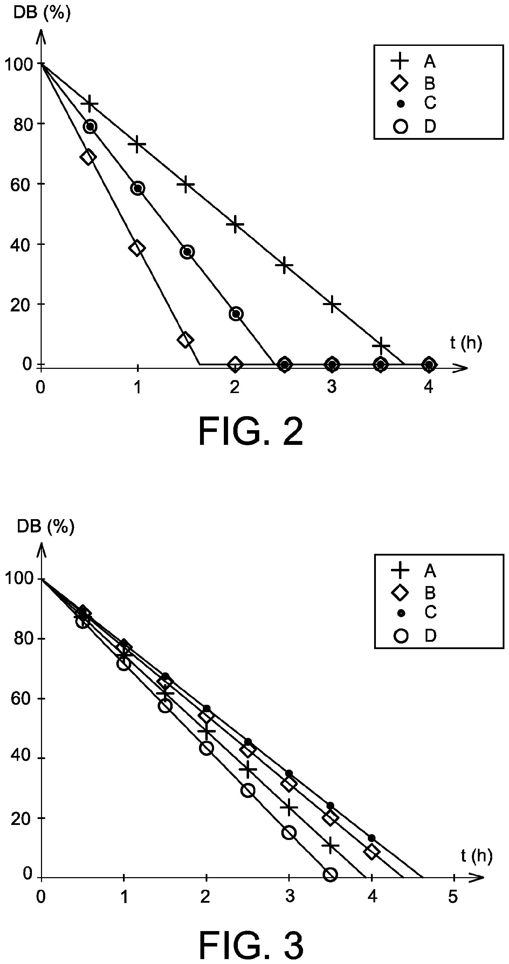

Des simulations ont été réalisées pour estimer les performances du procédé selon l'invention (procédé A selon l'exemple de la figure 1, dont la décharge de la batterie est illustrée par les courbes avec des croix sur les figures 2-4) par comparaison à d'autres procédés de traitement de tâches devant être mises en œuvres par un équipement mobile d'usager. On considère ainsi à titre de comparaison, un procédé dans lequel aucun déport n'est réalisé (procédé B : courbes avec des losanges), un procédé inspiré de l'approche conventionnelle dans laquelle la décision de déport est prise lorsque l'énergie consommée par l'équipement sans fil pour exécuter la tâche est inférieure à l'énergie consommée par l'équipement sans fil pour réaliser le déport de la tâche vers un point d'accès local de type femto-cellule (procédé C : courbes avec des points), et un procédé dans lequel un déport est systématiquement réalisé lorsque la tâche est déportable (procédé D : courbes avec des cercles)

Trois scénarii ont par ailleurs été envisagés qui sont une combinaison de paramètres représentant un coefficient moyen du canal (bas αₘᵢₙ, aléatoire αₘᵢₓ ou haut αₘₐₓ) et une quantité de calcul par tâche (bas TCmin, aléatoire TCₘᵢₓ ou haut TCmax). Selon le scénario n°1, les conditions du canal sont bonnes (αₘₐₓ) et les tâches nécessitent une grande quantité de calcul (TCₘₐₓ). Selon le scénario n°2, les conditions du canal sont mauvaises (αₘᵢₙ) et les tâches nécessitent une faible quantité de calcul (TCₘᵢₙ). Selon le scénario n°3, les conditions du canal sont aléatoires (αₘᵢₓ) et les tâches nécessitent une quantité de calcul aléatoire (TCmix).

Les simulations ont été réalisées en considérant un seul usager distant de 5 mètres de la station de base d'une femto-cellule. La bande passante montante est de 20 MHz, le coefficient d'affaiblissement le long du trajet est égal à 5, le bruit présente une puissance de 10⁻³ W, un temps de cohérence du canal de 10 ms. La puissance de transmission est de 0,2 W, et les simulations ont été réalisées sur environ 2.10⁵ instances du canal par heure.

L'équipement sans fil est caractérisé par une consommation d'énergie par instruction estimée entre 17nJ et 19nJ, une capacité énergétique totale entre 4Wh et 8Wh, et une mémoire disponible de 5MB.

Un appel d'application génère une slave de 10 tâches, chacune caractérisé par un besoin mémoire entre 1KB et 1MB, un nombre de bits à déporter entre 1KB et 20KB, une contrainte de latence entre 90ms et 300ms. L'appel d'application est modélisé selon une distribution de Poisson avec un taux de 2 sur 10 ms.

La figure 2 illustre la décharge de la batterie DB au cours du temps t (en heures) pour les quatre procédés A-D présentés ci-dessus, dans le cadre du scénario n°1. On constate que le déport est toujours bénéfique, et que le procédé A selon l'invention est plus performant que tous les autres procédés avec une prolongation de la durée de vie de la batterie de 2,29 fois par rapport au procédé B et de 1,55 fois par rapport au procédé D.

La figure 3 illustre la décharge de la batterie au cours du temps pour les quatre procédés A-D présentés ci-dessus, dans le cadre du scénario n°2. On constate que dans ce scénario, le procédé A selon l'invention est moins performant que le procédé C (déport uniquement sur le critère énergétique) et que le procédé B (pas de déport). Cela est dû au fait que le procédé A déporte les tâches déportables urgentes quelque soient les conditions du canal. Cela affecte la consommation, mais garantit une bonne QoE.

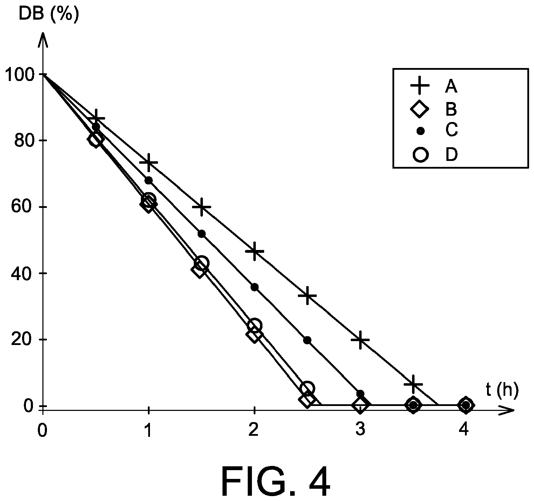

La figure 4 illustre la décharge de la batterie au cours du temps pour les quatre procédés A-D présentés ci-dessus, dans le cadre du scénario n°3. On constate que dans ce scénario aléatoire, le procédé A selon l'invention est plus performant que le procédé C (déport uniquement sur le critère énergétique), avec une durée de vie de la batterie prolongée de 1,45 fois par rapport au procédé B.

Les résultats de ces simulations sont reportés dans le tableau ci-dessous.

| Scénario | Procédé | Durée de vie de la batterie (min) | Dépassement de la capacité mémoire (%) | Dépassement de la capacité de calcul (%) |
|---|---|---|---|---|
| 1 | A | 223.9 | 0 | 0 |
| | B | 97.86 | 2.61 | 5.02 |
| | C | 144.77 | 0.17 | 4.31 |
| | D | 144.77 | 0.17 | 4.31 |
| 2 | A | 235.64 | 0 | 0 |
| | B | 263.19 | 0.3 | 0 |
| | C | 277.8 | 0.02 | 0 |
| | D | 231.02 | <0.01 | 0 |
| 3 | A | 223.96 | 0 | 0 |
| | B | 153.09 | 1.29 | 0 |
| | C | 187.09 | 0 | 0 |
| | D | 158.87 | 0 | 0 |

Ainsi, outre son intérêt en termes d'économie d'énergie, le procédé selon l'invention présente l'avantage de limiter les dépassements de la capacité mémoire ainsi que les dépassements de la capacité de calcul.

## Revendications

1. Procédé de traitement, local ou déporté, de tâches informatiques générées par une application logicielle en cours d'exécution sur un équipement sans fil d'un réseau de communication cellulaire, le procédé comprenant pour chacune des tâches :
- une étape de classification de la tâche dans une classe appartenant à un groupe de classes constitué au moins d'une classe d'exécution déportée immédiate et d'une classe d'exécution locale immédiate,
- lorsque la tâche appartient à la classe d'exécution déportée immédiate, une étape de transmission d'une requête d'exécution déportée de la tâche par un équipement tiers du réseau de communication cellulaire, et
- lorsque la tâche appartient à la classe d'exécution locale immédiate, une étape d'exécution prioritaire de la tâche par l'équipement sans fil, et **caractérisé en ce que** l'étape de classification est réalisée en parcourant un graphe orienté constitué de nœuds de décision (D1-D7) ayant chacun des successeurs dans le graphe et de nœuds terminaux (T1-T8) chacun affecté à une des classes dudit groupe, les nœuds de décision étant répartis en au moins trois niveaux hiérarchiques (N1-N4) eux-mêmes répartis en au moins trois sous-ensembles de niveaux (A1-A3), le parcours du graphe s'effectuant depuis un nœud de décision initial jusqu'à atteindre un nœud terminal, et comprenant :
- lors du passage par un nœud de décision (D1) quelconque d'un premier sous-ensemble de niveaux (A1), la vérification d'un critère de faisabilité (F) du déport de la tâche pour exécution par un équipement tiers,
- lors du passage par un nœud de décision (D2-D4) quelconque d'un deuxième sous-ensemble de niveau (A2), la vérification d'un critère de criticité (C1, C2) de l'exécution de la tâche, et
- lors du passage par un nœud de décision (D5-D7) quelconque d'un troisième sous-ensemble de niveaux (A3), la vérification d'un critère d'opportunité (O1, O2, O3) de l'exécution de la tâche.

2. Procédé selon la revendication 1, comprenant la réception par l'équipement sans fil d'un message d'autorisation d'exécution déportée de la tâche.

3. Procédé selon la revendication 1, dans lequel ledit groupe de classes est constitué au moins d'une classe d'exécution déportée immédiate, d'une classe d'exécution déportée différée, d'une classe d'exécution locale immédiate et d'une classe d'exécution locale différée.

4. Procédé selon l'une des revendications 1 à 3, dans lequel la vérification d'un critère de faisabilité (F) du déport de la tâche pour exécution par un équipement tiers comprend une mesure de l'état de la connectivité de l'équipement sans fil au réseau de communication cellulaire, ledit critère de faisabilité n'étant pas vérifié lorsque l'état de connectivité mesuré est inférieur à un seuil.

5. Procédé selon l'une des revendications 1 à 4, dans lequel la vérification d'un critère de criticité (C1) de l'exécution de la tâche comprend une détermination de la latence de la tâche, ledit critère de criticité n'étant pas vérifié lorsque la latence déterminée est supérieure à un seuil.

6. Procédé selon l'une des revendications 1 à 5, comprenant la vérification d'un critère de criticité de l'exécution de la tâche par l'équipement sans fil (C2).

7. Procédé selon la revendication 6, dans lequel ledit critère de criticité de l'exécution de la tâche par l'équipement sans fil (C2) est vérifié lorsque le niveau de charge de la batterie de l'équipement sans fil est inférieur à un seuil, ou lorsque la tâche consomme plus qu'un pourcentage donné du niveau de charge de la batterie, ou lorsque les besoins en mémoire de la tâche sont supérieurs à un pourcentage de la mémoire disponible de l'équipement sans fil, ou lorsque la tâche nécessite des capacités de traitement supérieures à un pourcentage des capacités de traitement de l'équipement sans fil.

8. Procédé selon l'une des revendications 1 à 7, comprenant la vérification d'un critère d'opportunité (O1, O2) du déport de la tâche pour exécution par un équipement tiers.

9. Procédé selon la revendication 8, dans lequel la vérification dudit critère d'opportunité du déport de la tâche pour exécution par un équipement tiers (O2) comprend une comparaison de l'état de connectivité de l'équipement sans fil au réseau de communication cellulaire à un état de connectivité moyen.

10. Procédé selon la revendication 8, dans lequel la vérification dudit critère d'opportunité du déport de la tâche pour exécution par un équipement tiers (O2) comprend une comparaison de la quantité d'énergie consommée si l'exécution de la tâche est déportée vers l'équipement tiers à la quantité d'énergie consommée si l'exécution de la tâche est réalisée en local par l'équipement sans fil.

11. Procédé selon l'une des revendications 1 à 10, comprenant la vérification d'un critère d'opportunité de l'exécution de la tâche par l'équipement sans fil (O3).

12. Procédé selon la revendication 11, dans lequel ledit critère d'opportunité de l'exécution de la tâche par l'équipement sans fil (O3) n'est pas vérifié lorsque le niveau de charge de la batterie de l'équipement sans fil est inférieur à un seuil, ou lorsque la tâche consomme plus qu'un pourcentage donné du niveau de charge de la batterie, ou lorsque les besoins en mémoire de la tâche sont supérieurs à un pourcentage de la mémoire disponible de l'équipement sans fil, ou lorsque la tâche nécessite des capacités de traitement supérieures à un pourcentage des capacités de traitement de l'équipement sans fil.

13. Procédé selon l'une des revendications 1 à 12, dans lequel l'équipement sans fil est un équipement mobile d'usager et l'équipement tiers est un point d'accès local au réseau de communication cellulaire couvrant une microcellule, un picocellule ou une femtocellule, ou un relais vers ledit point d'accès local.

14. Produit programme d'ordinateur comprenant des instructions de code pour l'exécution de l'étape de classification du procédé selon l'une des revendications 1 à 13, lorsque ledit programme est exécuté sur un ordinateur.

## Patentansprüche

1. Verfahren zur lokalen oder ausgelagerten Bearbeitung von Computeraufgaben, die von einer Softwareanwendung bei der Ausführung auf einem drahtlosen Gerät eines zellularen Kommunikationsnetzes erzeugt werden, wobei das Verfahren für jede der Aufgaben Folgendes umfasst:
- einen Schritt der Klassifizierung der Aufgabe in eine Klasse, die zu einer Gruppe von Klassen gehört, die mindestens aus einer Klasse der unmittelbaren ausgelagerten Ausführung und einer Klasse der unmittelbaren lokalen Ausführung besteht,
- wenn die Aufgabe zur Klasse der unmittelbaren ausgelagerten Ausführung gehört, einen Schritt der Übertragung einer Anforderung zur ausgelagerten Ausführung der Aufgabe durch ein Drittgerät des zellularen Kommunikationsnetzes, und
- wenn die Aufgabe zur Klasse der unmittelbaren lokalen Ausführung gehört, einen Schritt der vorrangigen Ausführung der Aufgabe durch das drahtlose Gerät,
**dadurch gekennzeichnet, dass**
der Schritt der Klassifizierung durchgeführt wird, indem ein gerichteter Graph durchlaufen wird, der aus Entscheidungsknoten (D1-D7), die jeweils Nachfolger im Graphen haben, und aus Endknoten (T1-T8) besteht, die jeweils einer der Klassen der genannten Gruppe zugeordnet sind, wobei die Entscheidungsknoten in mindestens drei hierarchische Ebenen (N1-N4) unterteilt sind, die ihrerseits in mindestens drei Untereinheiten von Ebenen (A1-A3) unterteilt sind, wobei das Durchlaufen des Graphen von einem anfänglichen Entscheidungsknoten bis zum Erreichen eines Endknotens erfolgt, und umfasst:
- beim Durchgang durch einen beliebigen Entscheidungsknoten (D1) einer ersten Untereinheit von Ebenen (A1) die Überprüfung eines Machbarkeitskriteriums (F) für die Auslagerung der Aufgabe zur Ausführung durch ein Drittgerät,
- beim Durchgang durch einen beliebigen Entscheidungsknoten (D2-D4) einer zweiten Untereinheit von Ebenen (A2), die Überprüfung eines Kritikalitätskriteriums (C1, C2) für die Ausführung der Aufgabe, und
- beim Durchgang durch einen beliebigen Entscheidungsknoten (D5-D7) einer dritten Untereinheit von Ebenen (A3), die Überprüfung eines Opportunitätskriteriums (O1, O2, O3) für die Ausführung der Aufgabe.

2. Verfahren nach Anspruch 1, umfassend das Empfangen einer Nachricht durch das drahtlose Gerät, die die ausgelagerte Ausführung der Aufgabe autorisiert.

3. Verfahren nach Anspruch 1, wobei die genannte Gruppe von Klassen mindestens aus einer Klasse für unmittelbare ausgelagerte Ausführung, einer Klasse für zeitversetzte ausgelagerte Ausführung, einer Klasse für unmittelbare lokale Ausführung und einer Klasse für zeitversetzte lokale Ausführung besteht.

4. Verfahren nach einem der Ansprüche 1 bis 3, wobei die Überprüfung eines Machbarkeitskriteriums (F) für das Auslagern der Aufgabe zur Ausführung durch ein Drittgerät eine Messung des Konnektivitätsstatus des drahtlosen Geräts zum zellularen Kommunikationsnetz umfasst, wobei das Machbarkeitskriterium nicht überprüft wird, wenn der gemessene Konnektivitätsstatus unterhalb eines Schwellenwerts liegt.

5. Verfahren nach einem der Ansprüche 1 bis 4, wobei die Überprüfung eines Kritikalitätskriteriums (C1) für die Aufgabenausführung eine Ermittlung der Latenz der Aufgabe umfasst, wobei das Kritikalitätskriterium nicht überprüft wird, wenn die ermittelte Latenz über einem Schwellenwert liegt.

6. Verfahren nach einem der Ansprüche 1 bis 5, umfassend die Überprüfung eines Kritikalitätskriteriums für die Ausführung der Aufgabe durch das drahtlose Gerät (C2).

7. Verfahren nach Anspruch 6, wobei das Kritikalitätskriterium für die Ausführung der Aufgabe durch das drahtlose Gerät (C2) überprüft wird, wenn der Ladezustand der Batterie des drahtlosen Geräts unter einem Schwellenwert liegt, oder wenn die Aufgabe mehr als einen gegebenen Prozentsatz des Ladezustands der Batterie verbraucht, oder wenn die Speicheranforderungen der Aufgabe höher als ein Prozentsatz des verfügbaren Speichers des drahtlosen Geräts sind, oder wenn die Aufgabe Verarbeitungskapazitäten erfordert, die höher als ein Prozentsatz der Verarbeitungskapazitäten des drahtlosen Geräts sind.

8. Verfahren nach einem der Ansprüche 1 bis 7, umfassend die Überprüfung eines Opportunitätskriteriums (O1, O2) für die Auslagerung der Aufgabe zur Ausführung durch ein Drittgerät.

9. Verfahren nach Anspruch 8, wobei die Überprüfung des Opportunitätskriteriums für die Auslagerung der Aufgabe zur Ausführung durch ein Drittgerät (O2) einen Vergleich des Konnektivitätsstatus des drahtlosen Geräts zum zellularen Kommunikationsnetz mit einem durchschnittlichen Konnektivitätsstatus umfasst.

10. Verfahren nach Anspruch 8, wobei die Überprüfung des Opportunitätskriteriums für die Auslagerung der Aufgabe zur Ausführung durch ein Drittgerät (O2) einen Vergleich der Energiemenge, die verbraucht wird, wenn die Ausführung der Aufgabe an das Drittgerät ausgelagert wird, mit der Energiemenge, die verbraucht wird, wenn die Ausführung der Aufgabe lokal durch das drahtlose Gerät ausgeführt wird, umfasst.

11. Verfahren nach einem der Ansprüche 1 bis 10, umfassend die Überprüfung eines Opportunitätskriteriums für die Ausführung der Aufgabe durch das drahtlose Gerät (O3).

12. Verfahren nach Anspruch 11, wobei das Opportunitätskriteriums für die Ausführung der Aufgabe durch das drahtlose Gerät (O3) nicht überprüft wird, wenn der Batterieladezustand des drahtlosen Geräts unter einem Schwellenwert liegt, oder wenn die Aufgabe mehr als einen gegebenen Prozentsatz des Batterieladezustands verbraucht, oder wenn die Speicheranforderungen der Aufgabe höher als ein Prozentsatz des verfügbaren Speichers des drahtlosen Geräts sind, oder wenn die Aufgabe Verarbeitungskapazitäten erfordert, die höher als ein Prozentsatz der Verarbeitungskapazitäten des drahtlosen Geräts sind.

13. Verfahren nach einem der Ansprüche 1 bis 12, wobei das drahtlose Gerät ein mobiles Gerät eines Nutzers ist und das Drittgerät ein lokaler Zugangspunkt zum zellularen Kommunikationsnetz ist, der eine Mikrozelle, eine Pikozelle oder eine Femtozelle abdeckt, oder ein Relais zu dem lokalen Zugangspunkt.

14. Computerprogrammprodukt, das Codeanweisungen zur Ausführung des Schritts der Klassifizierung des Verfahrens nach einem der Ansprüche 1 bis 13 umfasst, wenn das Programm auf einem Computer ausgeführt wird.

## Claims

1. Method for local or offloaded processing of computing tasks that are generated by a software application in course of execution on a wireless equipment of a cellular communication network, the method comprising for each of the tasks:
- a step of classifying the task in a class belonging to a group of classes formed from at least one class of immediate offloaded execution and one class of immediate local execution,
- if the task belongs to the class of immediate offloaded execution, a step of transmitting an offload execution request for the execution of the task by a third-party equipment of the cellular communication network, and
- if the task belongs to the class of immediate local execution, a step for the priority execution of the task by the wireless equipment,
and **characterized in that** the classifying step is performed by traversing an oriented graph consisting of decision nodes (D1-D7), each having successor nodes in the graph and terminal nodes (T1-T8), each assigned to one of the classes of said group, the decision nodes being distributed into at least three hierarchical levels (N1-N4), themselves distributed into at least three subsets of levels (A1-A3), the traversal of the graph taking place from an initial decision node to reach a terminal node, and comprising:
- during the transit through any decision node (D1) of a first subset of levels (A1), the verification of a feasibility criterion (F) for the offloading of the task for execution by a third-party equipment,
- during the transit through any decision node (D2-D4) of a second subset of levels (A2), the verification of a criticality criterion (C1, C2) for the execution of the task, and
- during the transit through any decision node (D5-D7) of a third subset of levels (A3), the verification of an opportunity criterion (O1, O2, O3) for the execution of the task.

2. Method according to claim 1, comprising the receipt by the wireless equipment of an authorisation message authorising the offloaded execution of the task.

3. Method according to claim 1, wherein said group of classes is formed from at least one class of immediate offloaded execution, one class of deferred offloaded execution, one class of immediate local execution and one class of deferred local execution.

4. Method according to one of claims 1 to 3, wherein the verification of a feasibility criterion (F) for the offloading of the task for execution by a third-party equipment comprises a measurement of the connectivity status of the wireless equipment with the cellular communication network, said feasibility criterion not being verified if the connectivity status measured is less than a threshold.

5. Method according to one of claims 1 to 4, wherein the verification of a criticality criterion (C1) for the execution of the task comprises the determination of the latency of the task, said criticality criterion not being verified if the latency determined is greater than a threshold.

6. Method according to one of claims 1 to 5, comprising the verification of a criticality criterion for the execution of the task by the wireless equipment (C2).

7. Method according to claim 6, wherein said criticality criterion for the execution of the task by the wireless equipment (C2) is verified when the level of charge of the battery of the wireless equipment is less than a threshold, or when the task consumes more than a given percentage of the level of charge of the battery, or when the memory needs for the task are greater than a percentage of the available memory of the wireless equipment, or when the task requires processing capacities that exceed a percentage of the processing capacities of the wireless equipment.

8. Method according to one of claims 1 to 7, comprising the verification of an opportunity criterion (O1, O2) for the offloading of the task for execution by a third-party equipment.

9. Method according to claim 8, wherein the verification of said opportunity criterion for the offloading of the task for execution by a third-party equipment (O2) comprises a comparison between the connectivity status of the wireless equipment with the cellular communication network and a mean connectivity status.

10. Method according to claim 8, wherein the verification of said opportunity criterion for the offloading of the task for execution by a third-party equipment (O2) comprises a comparison between the quantity of energy consumed if the execution of the task is offloaded to the third-party equipment and the quantity of energy consumed if the execution of the task is performed locally by the wireless equipment.

11. Method according to one of claims 1 to 10, comprising the verification of an opportunity criterion for the execution of the task by the wireless equipment (O3).

12. Method according to claim 11, wherein said opportunity criterion for the execution of the task by the wireless equipment (O3) is not verified when the level of charge of the battery of the wireless equipment is less than a threshold, or when the task consumes more than a given percentage of the level of charge of the battery, or when the memory needs for the task are greater than a percentage of the available memory of the wireless equipment, or when the task requires processing capacities that exceed a percentage of the processing capacities of the wireless equipment.

13. Method according to one of claims 1 to 12, wherein the wireless equipment is a mobile user equipment and the third-party equipment is a local access point to the cellular communication network covering a microcell, a picocell or a femtocell, or a relay to said local access point.

14. Computer program product comprising code instructions for executing the classifying step of the method according to one of claims 1 to 13, when said program is executed on a computer.
